# DEMANDE DE BREVET EUROPEEN

(11) **EP 1 371 314 A1**
(43) Date de publication de la demande: **17.12.2003**
(21) Numéro de dépôt: 03290046.6
(22) Date de dépôt: 09.01.2003
(51) Int. Cl.: A47J 43/28, A23G 9/28

(54) **Cuillère à glace**

(30) Priorité: 11.06.2002 FR 0207134
(71) Demandeur: Mastrad, 75002 Paris (FR)
(72) Inventeur: Lion, Mathieu c/o Mastard SA, 75002 Paris (FR); Bignon, Lucas, 94230 Cachan (FR)
(74) Mandataire: Texier, Christian

(57) **Abrégé**

La présente invention concerne une cuillère à glace comprenant un manche (10) qui porte une coupelle (40) globalement hémisphérique, caractérisée par le fait que la coupelle (40) comporte une partie de fond (30) en matériau souple déformable.

## Description

La présente invention concerne le domaine des ustensiles de cuisine.

Plus précisément encore, la présente invention concerne une cuillère à glace.

Ce domaine a donné lieu à une littérature très abondante.

On pourra par exemple se référer aux documents suivants FR-A-911 080, FR-A-927 874, FR-A-933 163, FR-A-968 190, EP-A-0 331 520, BE-A-1 010 281, US-A-4 161 381, US-A-4 699 582, US-A-4 392 806, DE-A-36 22 034.

Comme on le comprend à la lecture des documents précités, la majorité des cuillères à glace jusqu'ici proposées comprennent un manche qui porte une coupelle globalement hémisphérique rigide et un levier ou racleur mobile, placé dans la coupelle, généralement monté à pivotement dans celle-ci, et associé à des moyens d'actionnement pour décoller la boule de glace contenue dans la coupelle.

La présente invention a maintenant pour but de perfectionner les cuillères à glace connues.

Ce but est atteint dans le cadre de la présente invention grâce à une cuillère à glace comprenant un manche qui porte une coupelle globalement hémisphérique, caractérisée par le fait que la coupelle comporte une partie de fond en matériau souple déformable.

Comme on le précisera par la suite, la cuillère conforme à la présente invention permet notamment, grâce à la présence de la partie de fond en matériau souple déformable, un démoulage aisé du contenu de la coupelle.

D'autres caractéristiques, buts et avantages de la présente invention apparaîtront à la lecture de la description détaillée qui va suivre, et en regard des dessins annexés, donnés à titre d'exemple non limitatif et sur lesquels :
- la figure 1 représente une vue latérale externe d'une cuillère à glace conforme à la présente invention et
- la figure 2 représente une vue en coupe longitudinale de la même cuillère à glace.

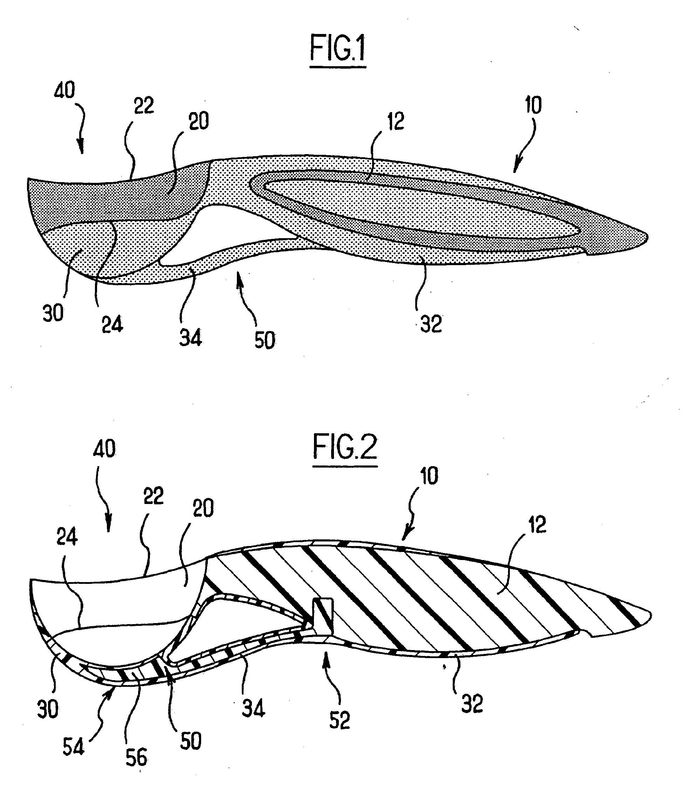

On aperçoit sur les figures 1 et 2, une cuillère à glace qui comprend un manche rigide allongé 10 et une coupelle 40 globalement hémisphérique.

De préférence la cuillère présente un plan de symétrie longitudinal passant par le plan de coupe qui coïncide avec le plan de la figure 2.

Le manche 10 est lié, par une extrémité, à un cadre rigide en forme d'anneau fermé 20. Les bords de celui-ci peuvent être légèrement incurvés ou ondulés.

Un bord 22 de l'anneau 20, dénommé « bord supérieur » dans le cadre de la présente demande, délimite le contour d'ouverture de la coupelle globalement hémisphérique 40.

Le fond de celle-ci est formé d'une calotte 30 de géométrie sphérique en matériau souple déformable, et de préférence élastique. Celle-ci se raccorde sur le cadre 20, au niveau de la bordure périphérique inférieure 24 de celui-ci.

Ainsi la calotte 30 forme en combinaison avec l'anneau 20 une coupelle hémisphérique étanche.

Typiquement la calotte 30 couvre un angle solide supérieur à 90°, avantageusement compris entre 100 et 130°.

Le cadre rigide 20 permet de prélever facilement de la glace dans un bac de réserve. A cette occasion une boule de glace est logée dans la coupelle 40.

Il est ensuite facile, grâce à la présente invention, de démouler ladite boule de glace et de transférer celle-ci à partir de la coupelle 40 vers tout lieu approprié, coupe ou équivalent, par déformation de la calotte 30.

Plus précisément dans le cadre de la présente invention, de préférence le manche 10 comporte un insert rigide 12 solidaire du cadre ou anneau 20. L'insert 12 est partiellement recouvert d'une enveloppe en matériau souple 32. Celle-ci est de préférence venue d'une pièce avec le fond souple 30.

La géométrie particulière de l'insert 12 et de l'enveloppe souple 32 relève essentiellement de l'ergonomie et de l'esthétique. Elle ne sera pas décrite dans le détail par la suite. Bien entendu elle n'est pas limitée au mode de réalisation particulier illustré sur les figures annexées.

On notera à l'examen des figures annexées que de préférence, dans le cadre de la présente invention, la cuillère comporte en outre un levier 50 en matériau rigide, susceptible d'être actionné par l'utilisateur pour solliciter le fond souple 30 de la coupelle.

De préférence le levier 50 s'étend dans le plan de symétrie précité, en dessous de la zone de liaison entre le manche 10 et la coupelle 30. Le levier 50 forme ainsi un pont entre le manche 10 et le fond 30 de la coupelle.

Le levier 50 est articulé par une extrémité 52 sur le manche 10, plus précisément sur la face inférieure de celui-ci, tandis qu'à son autre extrémité 54, le levier 50 possède une excroissance 56 ayant globalement la forme d'une calotte sphérique, présentant une ouverture angulaire inférieure à la calotte souple 30 et sous jacente à celle-ci. La calotte rigide 56 solidaire du levier 50 couvre typiquement un angle solide de l'ordre de 45°.

L'articulation définie entre la première extrémité 52 du levier 50 et le manche 10 peut prendre de nombreuses configurations. De préférence la première extrémité 52 du levier 50 comporte une embase élargie 53 engagée dans une cavité complémentaire du manche 10.

De préférence comme on le voit sur les figures annexées, le levier 50 est formé d'un insert 58 totalement recouvert par une enveloppe 34 de matière souple 30 venue d'une pièce avec le fond 30 et l'enveloppe 32 du manche 10.

L'homme de l'art comprendra qu'un tel levier 50 peut aisément être actionné par l'index d'un utilisateur. Lors d'un tel actionnement, le levier 50 est sollicité en rapprochement de la zone de liaison entre le manche 10 et la coupelle 30. Ainsi le levier 50 pivote par sa première extrémité 52 sur le manche 10 et sollicite le fond 30 à déformation vers l'intérieur de la coupelle 40 provoquant le démoulage du contenu de la coupelle 40.

Après relâchement, le levier 50 reprend automatiquement sa position de repos illustrée sur les figures grâce au rappel élastique exercé par le fond 30 et la matière qui entoure le levier 50, notamment la première extrémité 52 de celui-ci.

La cuillère à glace conforme à la présente invention représentée sur les figures annexées peut être réalisée selon diverses techniques.

Selon une première mise en oeuvre, la cuillère à glace conforme à la présente invention peut être réalisée à l'aide d'un cadre rigide 20 et d'une calotte souple 30 constituées de pièces initialement séparées puis assemblées.

A titre d'exemple non limitatif, le cadre 20 peut dans ce contexte être formé en métal, par exemple en acier, aluminium ou alliage de zinc, tandis que la calotte 30 est réalisé en matériau souple, par exemple en silicone ou en matière plastique. La liaison entre le cadre rigide 20 et la calotte 30 peut être formée de tout moyen approprié, par exemple par collage, soudage, thermique ou ultrasons, rivetage ou équivalent.

Cependant dans le cadre de la présente invention, de préférence la cuillère est réalisée d'une pièce intégralement en matière synthétique, par exemple plastique. Elle est alors réalisée de préférence par co-injection, coextrusion, surmoulage ou équivalent.

D'une façon générale, dans le cadre de la présente invention, le cadre 20 peut être formé d'un matériau choisi dans le groupe comprenant : l'ABS(acrylonitrile butadiène styrène), le polycarbonate, les polypropylènes, tandis que la calotte 30 est réalisée en un matériau choisi dans le groupe comprenant : les élastomères, le caoutchouc, le silicone, les textiles étanches.

De préférence dans le cadre de la présente invention, l'insert 12 du manche et le cadre rigide 20 sont réalisés en polyéthylène, tandis que l'enveloppe 32 et le fond souple 30 sont réalisés en un élastomère thermoplastique.

Le levier 50 est également avantageusement en polypropylène.

Bien entendu la présente invention n'est pas limitée au mode de réalisation particulier qui vient d'être décrit mais s'étend à toute variante conforme à son esprit.

Par ailleurs la présente invention n'est pas limitée aux matériaux précédemment indiqués.

La présente invention offre en particulier l'avantage d'une hygiène parfaite. En effet contrairement à l'état de la technique selon lequel la coupelle comporte un levier ou racleur mobile dont le nettoyage reste toujours difficile, la coupelle de la cuillère conforme à la présente invention destinée à entrer en contact avec la glace, ne comporte ni pièce mobile, ni surface cachée, ni zone difficile d'accès.

## Revendications

1. Cuillère à glace comprenant un manche (10) qui porte une coupelle (40) globalement hémisphérique, **caractérisée par le fait que** la coupelle (40) comporte une partie de fond (30) en matériau souple déformable.

2. Cuillère selon la revendication 1, **caractérisée par le fait que** le manche (10) est lié, par une extrémité, à un cadre (20) rigide qui délimite le contour d'ouverture de la coupelle globalement hémisphérique (40).

3. Cuillère selon la revendication 2, **caractérisée par le fait que** le fond (30) en matériau souple est formé d'une calotte liée au cadre (20).

4. Cuillère selon l'une des revendications 1 à 3, **caractérisée par le fait que** le fond (30) en matériau souple à la forme d'une calotte hémisphérique.

5. Cuillère selon l'une des revendications 1 à 4, **caractérisée par le fait que** le fond (30) en matériau souple couvre un angle solide supérieur à 90°, avantageusement compris entre 100 et 130°.

6. Cuillère selon l'une des revendications 1 à 5, **caractérisée par le fait qu'**elle comprend en outre un levier (50) en matériau rigide, positionné pour être actionné par l'utilisateur afin de solliciter le fond souple (30) de la coupelle.

7. Cuillère selon la revendication 6, **caractérisée par le fait que** le levier (50) est articulé par une extrémité (52) sur le manche (10).

8. Cuillère selon l'une des revendications 6 ou 7, **caractérisée par le fait que** le levier (50) possède une excroissance (56) ayant globalement la forme d'une calotte sphérique, présentant une ouverture angulaire inférieure à la calotte souple (30) et sous jacente à celle-ci.

9. Cuillère selon la revendication 8, **caractérisée par le fait que** l'excroissance (56) solidaire du levier (50) couvre un angle solide de l'ordre de 45°.

10. Cuillère selon la revendication 2, **caractérisée par le fait que** le manche (10) comporte un insert rigide (12) solidaire du cadre (20).

11. Cuillère selon la revendication 10, **caractérisée par le fait que** l'insert (12) est partiellement recouvert d'une enveloppe en matériau souple (32).

12. Cuillère selon la revendication 11, **caractérisée par le fait que** l'enveloppe en matériau souple (32) est venue d'une pièce avec le fond souple (30).

13. Cuillère selon l'une des revendications 1 à 12, **caractérisée par le fait qu'**elle est réalisée d'une pièce intégralement en matière synthétique.

14. Cuillère selon l'une des revendications 1 à 13, **caractérisée par le fait qu'**elle est réalisée par co-injection, coextrusion ou surmoulage.

15. Cuillère selon l'une des revendications 1 à 14, **caractérisée par le fait qu'**un cadre rigide (20) de la coupelle (40) est réalisé en polyéthylène.

16. Cuillère selon l'une des revendications 1 à 15, **caractérisée par le fait que** un insert (12) du manche est réalisé en polyéthylène.

17. Cuillère selon l'une des revendications 1 à 16, **caractérisée par le fait que** le fond souple (30) est réalisé en un élastomère thermoplastique.

18. Cuillère selon l'une des revendications 1 à 17, **caractérisée par le fait que** le levier (50) est en polypropylène.

19. Cuillère selon l'une des revendications 1 à 14, **caractérisée par le fait que** la coupelle (40) comporte un cadre (20) en un matériau choisi dans le groupe comprenant : l'ABS(acrylonitrile butadiène styrène), le polycarbonate, les polypropylènes, tandis que le fond souple (30) est réalisé en un matériau choisi dans le groupe comprenant : les élastomères, le caoutchouc, le silicone, les textiles étanches.

20. Cuillère selon l'une des revendications 1 à 14, **caractérisée par le fait que** la coupelle (40) comporte un cadre (20) formé en métal, par exemple en acier, aluminium ou alliage de zinc, tandis que le fond souple (30) est réalisé en matériau souple, par exemple en silicone ou en matière plastique.
